# EUROPÄISCHE PATENTANMELDUNG

(11) **EP 0 669 699 A1**
(43) Veröffentlichungstag der Anmeldung: **30.08.1995**
(21) Anmeldenummer: 95250013.0
(22) Anmeldetag: 23.01.1995
(51) Int. Cl.: H02K 37/12, H02K 21/22

(54) **Rotatorische elektrische Maschine**

(30) Priorität: 23.02.1994 DE 4406471
(71) Anmelder: FICHTEL & SACHS AG, D-97424 Schweinfurt (DE)
(72) Erfinder: Sonnenburg, Reinhard, Dr. rer. nat., D-97702 Münnerstadt (DE)
(74) Vertreter: Presting, Hans-Joachim, Dipl.-Ing.

(57) **Zusammenfassung**

Die Erfindung betrifft eine rotatorische elektrische Maschine mit einem Gehäuse (3), einem innenliegenden Stator (1) und einem als Außenläufer im Gehäuse (3) drehbar angeordneten Rotor (2) sowie mit einer zwischen der Wand des Gehäuses (3) und dem Rotor (2) angeordneten magnetischen Abschirmung (10, 11).

Um eine wirksame magnetische Abschirmung zu erreichen, ohne daß im Gehäuse und in der Abschirmung der Maschine eine zu starke Erwärmung zu befürchten ist und deren Leistung zu stark beeinträchtigt wird, wird erfindungsgemäß vorgeschlagen, daß die magnetische Abschirmung (10, 11) drehfest mit dem Rotor (2) verbunden ist.

## Beschreibung

Die Erfindung betrifft eine rotatorische elektrische Maschine, die als Außenläufermaschine gemäß dem Gattungsbegriff des Patentanspruchs 1 ausgebildet ist.

Beim Betrieb von Außenläufermaschinen (Motoren oder Generatoren) entstehen durch magnetische Streufelder in elektrisch leitenden Gehäuseteilen Wirbelstromverluste, deren Größe von der Drehzahl, dem Gehäusematerial und der Stärke der Streufelder abhängt. Zur Verringerung derartiger Verluste sind magnetische Abschirmungen bekannt, die an der Innenseite des Gehäuses angebracht sind. Als besonders geeignete Werkstoffe werden für die Abschirmung Elektrobleche eingesetzt. Beispiele hierfür sind die Werkstoffe MUNITALL, VACOPERM 100, PERMINORM 5000 H3 und PERMINORM 6301, die von der Firma Vacuumschmelze GmbH, Hanau, angeboten werden. Es handelt sich um weichmagnetische Eisenlegierungen, die eine sehr hohe Permeabilität aufweisen. Grundlegende Angaben zu diesem Problemkreis finden sich in der Firmenschrift "magnetische Abschirmung" dieses Unternehmens.

Durch eine auf der Innenseite des Gehäuses befestigte Abschirmung wird das Gehäuse zwar weitgehend vor magnetischen Streufeldern des Rotors abgeschirmt, dafür treten aber in der Abschirmung selbst erhebliche Wirbelströme auf, so daß diese sich stark erwärmt. Dies führt zu einer entsprechenden Wirkungsgradverminderung.

Aufgabe der Erfindung ist es, eine gattungsgemäße elektrische Maschine in der Weise zu verbessern, daß eine wirksame magnetische Abschirmung erreicht wird, ohne daß im Gehäuse und in der Abschirmung eine zu starke Erwärmung zu befürchten ist und die Leistung der Maschine zu stark beeinträchtigt wird.

Gelöst wird diese Aufgabe durch eine elektrische Maschine mit den kennzeichnenden Merkmalen des Patentanspruchs 1. Vorteilhafte Weiterbildungen der Erfindung sind in den Unteransprüchen 2 bis 10 angegeben.

Der grundlegende Gedanke der Erfindung besteht darin, die magnetische Abschirmung nicht wie bisher stationär am Gehäuse der elektrischen Maschine zu befestigen, sondern diese drehfest mit dem Rotor zu verbinden. Hierzu wird der Rotor zweckmäßig zunächst von einer ersten Schicht aus magnetisch nicht leitendem Material umgeben. Dies könnte beispielsweise auch eine Luftschicht sein. Empfehlenswerter sind aber diamagnetische Stoffe, die darüber hinaus möglichst auch nicht elektrisch leitend sein sollten, wie etwa Kunststoffe, vorzugsweise hochfeste Kunststoffe wie Kohlefaserwerkstoffe oder glasfaserverstärkte Kunststoffe. Letztere haben den großen Vorteil, daß sie die Magnetpole des Rotors (vorzugsweise aus Hochleistungspermantmagneten gebildet) außen als feste Bandage umgeben und dadurch die Berstdrehzahl einer solchen Maschine deutlich erhöhen. Eine ähnliche Wirkung läßt sich auch mit einem Bandagering aus Edelstahlblech als erster Schicht erzielen.

Die erste Schicht der Abschirmung ist von einer zweiten Schicht aus magnetisch leitendem Material umgeben, vorzugsweise von einer Schicht aus Elektroblech, also einem Material mit hoher Permeabilität. Wesentlich ist es, daß diese zweite Schicht im Betriebszustand ihre Lage relativ zum Rotor nicht verändern darf. Auf diese Weise kann erreicht werden, daß die Streufelder, die das Gehäuse der elektrischen Maschine noch erreichen, etwa zwei bis fünfmal kleiner sind als ohne Abschirmung. Eine Erwärmung der Abschirmung selbst tritt bei dieser Anordnung nicht auf, da die magnetischen Felder wegen des Mitdrehens der Abschirmung mit dem Rotor statisch sind.

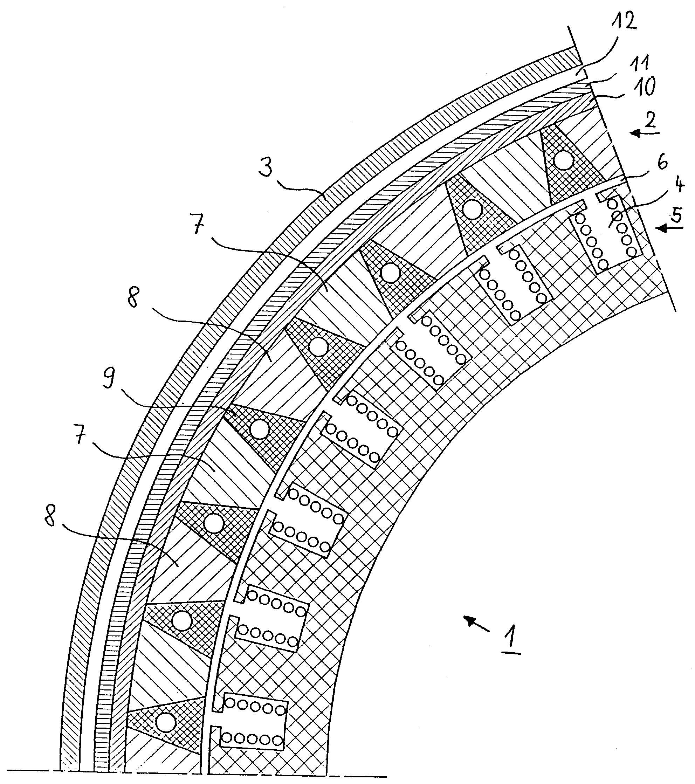

Anhand des in der einzigen Figur dargestellten Ausführungsbeispiels wird die Erfindung nachfolgend näher erläutert. Die schematische Darstellung der Figur zeigt in einem axialen Querschnitt einen Ausschnitt aus einer erfindungsgemäßen elektrischen Maschine.

Der Stator 1 der elektrischen Maschine weist zur Erzeugung eines magnetischen Drehfeldes elektrische Statorwicklungen 4 und Statorblechpakete 5 aus Elektroblech auf. Der außenliegende Rotor 2 der Maschine ist in bevorzugter Weise aus einer Vielzahl abwechselnd gepolter Permanentmagneten 7, 8 gebildet, wobei zwischen benachbarten Permanentmagneten 7, 8 jeweils ein Magnetflußkeil 9 angeordnet ist. Die Magnetflußkeile 9 sind ebenfalls aus Elektroblech, d.h. aus einem weichmagnetischen Werkstoff hergestellt. Anstelle der Permanentmagneten könnte auch eine Erregung des Rotors mittels Elektromagneten vorgesehen sein. Der aus dem Permanentmagneten 7, 8 und den Magnetflußkeilen 9 gebildete Ring des Rotors 2 ist außen von einer Schicht 10 aus glasfaserverstärktem Kunststoff umgeben. Dadurch wird eine äußere Bandage gebildet, die die Berstdrehzahl des Rotors 2 erhöht. Unmittelbar auf der Kunststoffschicht 10, die alternativ beispielsweise auch eine Edelstahlblechschicht sein könnte, ist eine zweite Schicht 11 aus Elektroblech angeordnet. Diese weichmagnetische Schicht 11 stellt den eigentlichen Kern der magnetischen Abschirmung dar. Durch die erste Schicht 10 ist sie in einem gewissen radialen Abstand von den Magnetpolen des Rotors 2 angeordnet. Auch die Elektroblechschicht 11 trägt zur Verbesserung der Berstdrehzahl des Rotors 2 bei. Das Gehäuse der elektrischen Maschine ist mit 3 bezeichnet. Sowohl zwischen dem Rotor 2 und dem Stator 1 als auch zwischen dem Rotor 2 und dem Gehäuse 3 ist jeweils ein ringförmiger Luftspalt 6 bzw. 12 vorgesehen, so daß der Rotor 2 frei drehen kann (Drehachse nicht dargestellt).

Im Hinblick auf die Dimensionierung der magnetischen Abschirmung, d.h. auf die Wahl der Schichtdicke der magnetisch leitenden Schicht 11 und ihres Abstandes von den Magnetpolen 7, 8 des Rotors 2 (also der Schichtdicke der magnetisch nicht leitenden Schicht sehen) sind gegenläufige Effekte zu beachten. Grundsätzlich gilt, daß das magnetische Feld jenseits der Abschirmung 10, 11 um so schwächer ist, je dicker die magnetisch leitende Schicht 11 ist und je größer ihr Abstand vom Rotor 2 ist. Auf der anderen Seite wird aber auch die Luftspaltinduktion zwischen Rotor 2 und Stator 11 und damit das von der Maschine erreichbare Drehmoment immer kleiner, je dicker die Abschirmung 10, 11 ist. Es kommt also darauf an, bei diesen gegenläufigen Tendenzen einen optimalen Kompromiß zu finden. Das bedeutet, daß die beiden Schichten so zueinander in ihrer Dicke einzustellen sind, daß bei Einhaltung einer ausreichenden Abschirmung eine möglicht hohe Induktion im Luftspalt 6 gewährleistet bleibt. Die nachfolgend angegebene Tabelle zeigt für einen Elektromotor der in der Figur dargestellten Bauart mit permanenterregtem Rotor und einem Luftspaltdurchmesser von 300 mm exemplarisch, welche Veränderungen sich in Abhängigkeit von den Schichtdicken ergeben. Als weichmagnetischer Werkstoff für die magnetisch leitende Schicht 11 wurde eine 48 % Nickel enthaltende Eisenlegierung mit einer sehr hohen Sättigungsinduktion verwendet.

| Schichtdicke 11 (mm) | Schichtdicke 10 (mm) | Induktion im Luftspalt 6 (T) | Induktion im Luftspalt 12 (7 mm vom Rotor entfernt) (T) |
|---|---|---|---|
| 0 | 0 | 1,22 | 0,12 |
| 2 | 2 | 1,08 | 0,047 |
| 2 | 4 | 1,14 | 0,00035 |
| 1,5 | 3,5 | 1,125 | 0,045 |
| 1 | 4 | 1,16 | 0,065 |

Aus der Tabelle geht hervor, daß ohne Abschirmung zwar eine maximale Induktion von 1,22 T im Luftspalt 6 zwischen Rotor 2 und Stator 1 vorliegt, also ein sehr hohes Drehmoment erzeugbar ist, daß aber auf der anderen Seite auch maximale Verluste entstehen infolge der starken Streufelder (0,12 T). Bei einer Schichtdicke von jeweils 2 mm für die weichmagnetische Schicht 11 und die diamagnetische Schicht 10 ist ein wesentlich schwächeres Streufeld (0,047 T, also -61 %) vorhanden, jedoch muß dies mit einer relativ starken Einbuße an Luftspaltinduktion (im Luftspalt 6) erkauft werden (1,08 T, also -11,5 %). Eine Vergrößerung der Schichtdicke 10 auf 4 mm (dritte Zeile der Tabelle) führt zu einem Verlust von Induktion im Luftspalt 6 von nur noch 6,5 % bei einer Verminderung der Streufelder um 99,7 %. Die in Zeile vier der Tabelle wiedergegebene Variation führt demgegenüber in beiden Induktionswerten zu Verschlechterungen des Ergebnisses. Die in der letzten Zeile angegebene Parameterkombination kann als vergleichsweise günstigste Lösung im Hinblick auf die Zielsetzungen angesehen werden. Die Induktion im Luftspalt 6 hat sich gegenüber dem Fall ohne Abschirmung nur um 4,9 % vermindert, während das Streufeld im Abstand von 7 mm vom Rotor um etwa den Faktor 2 kleiner geworden ist.

Die erfindungsgemäße Ausführung einer Abschirmung für eine elektrisch leitende Maschine ermöglicht auf einfache Weise eine sehr wirksame Abschirmung von Streufeldern, ohne die Leistung der Maschine zu stark zu verringern. Als zusätzlicher Vorteil der Erfindung ergibt sich besonders für permanentmagneterregte Maschinen bei der Verwendung hochfester Kunststoffe oder von Edelstahlbandagen als erste diamagnetische Schicht, die um den Rotor gelegt wird, damit die eigentliche magnetisch leitende Abschirmschicht in einen Abstand von den Magnetpolen des Rotors gebracht wird, daß die Berstdrehzahl des Rotors erheblich erhöht werden kann.

## Patentansprüche

1. Rotatorische elektrische Maschine mit einem Gehäuse (3), einem innenliegenden Stator (1) und einem als Außenläufer im Gehäuse (3) drehbar angeordneten Rotor (2) sowie mit einer zwischen der Wand des Gehäuses (3) und dem Rotor (2) angeordneten magnetischen Abschirmung (10,11),
dadurch gekennzeichnet,
daß die magnetische Abschirmung (10,11) drehfest mit dem Rotor (2) verbunden ist.

2. Maschine nach Anspruch 1,
dadurch gekennzeichnet,
daß der Rotor (2) außen von einer ersten Schicht (10) aus magnetisch nicht leitendem Material umgeben ist, welche ihrerseits außen von einer zweiten Schicht (11) aus magnetisch leitendem Material umgeben ist.

3. Maschine nach Anspruch 2,
dadurch gekennzeichnet,
daß die erste Schicht (10) aus diamagnetischem, elektrisch nicht leitendem Material gebildet ist.

4. Maschine nach Anspruch 3,
dadurch gekennzeichnet,
daß die erste Schicht (10) aus einem hochfesten Kunststoff in Form einer die Berstdrehzahl erhöhenden Bandage gebildet ist.

5. Maschine nach Anspruch 2,
dadurch gekennzeichnet,
daß die erste Schicht (10) aus einer Edelstahlbandage gebildet ist.

6. Maschine nach einem der Ansprüche 2 bis 5,
dadurch gekennzeichnet,
daß die zweite Schicht (11) aus Elektroblech besteht.

7. Maschine nach einem der Ansprüche 2 - 6,
dadurch gekennzeichnet,
daß die Dicke der ersten Schicht (10) und die Dicke der zweiten Schicht (11) so zueinander bemessen sind, daß die Induktion im Luftspalt zwischen Rotor (2) und Stator (1) möglichst groß ist, während die Induktion an der Außenseite der Abschirmung (10,11) auf einem ausreichend niedrigen Wert gehalten wird.

8. Maschine nach den Ansprüchen 6 - 7,
dadurch gekennzeichnet,
daß die Dicke der zweiten Schicht (11) im Bereich 1 - 2 mm liegt.

9. Maschine nach den Ansprüchen 6 - 8,
dadurch gekennzeichnet,
daß die Dicke der ersten Schicht (10) im Bereich 3 - 4 mm liegt.

10. Maschine nach einem der Ansprüche 1 - 9,
dadurch gekennzeichnet,
daß der Rotor (2) aus abwechselnd nebeneinander angeordneten Permanentmagnetpolen (7,8) mit dazwischen liegenden Magnetflußleitkeilen (9) aus Elektroblech gebildet ist.
